(19) Europäisches Patentamt
European Patent Office
Office européen des brevets

(11) **EP 4 429 099 B1**

(12) **EUROPEAN PATENT SPECIFICATION**

(45) Date of publication and mention
of the grant of the patent:
**27.08.2025 Bulletin 2025/35**

(21) Application number: **23161227.6**

(22) Date of filing: **10.03.2023**

(51) International Patent Classification (IPC):
***H02M 7/493*** *(2007.01)* ***H02M 7/5387*** *(2007.01)*

(52) Cooperative Patent Classification (CPC):
**H02M 7/493; H02M 7/5387; H02M 7/53871;**
**H02M 1/0025**

(54) **ARRANGEMENT FOR CURRENT SHARING OF PARALLEL-CONNECTED INVERTERS**

ANORDNUNG ZUR STROMTEILUNG VON PARALLEL GESCHALTETEN WECHSELRICHTERN

AGENCEMENT POUR LE PARTAGE DE COURANT D'ONDULEURS CONNECTÉS EN PARALLÈLE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**11.09.2024 Bulletin 2024/37**

(73) Proprietor: **ABB SCHWEIZ AG**
**5400 Baden (CH)**

(72) Inventors:
• **Leppänen, Veli-Matti**
**00680 Helsinki (FI)**
• **Muszynski, Peter**
**07910 Loviisa (FI)**
• **Viitanen, Tero**
**00380 Helsinki (FI)**

(74) Representative: **Kolster Oy Ab**
**Salmisaarenaukio 1**
**P.O. Box 204**
**00181 Helsinki (FI)**

(56) References cited:
**EP-A2- 0 813 292**   **US-A1- 2014 204 643**
**US-A1- 2016 172 976**

**Description**

FIELD OF THE INVENTION

The present invention relates to parallel-connected power inverters, and more particularly to a current sharing of parallel-connected power inverters.

BACKGROUND OF THE INVENTION

A dc-ac converter, also known as an inverter, converts dc power to ac power at desired output voltage and output frequency. The inverter therefore can be operated as an adjustable-frequency voltage source. The dc power input to the inverter may be obtained from an existing power supply network through a rectifier or from a battery, fuel cell, photovoltaic array, etc. The filter capacitor(s) across the input terminals of the inverter provides a fairly constant dc-link voltage. A configuration of ac to dc converter and dc to ac inverter may be called a dc-link converter.

In some situations, a power inverter with an increased output power capability is implemented by connecting a plurality of inverter units in parallel with one another to feed the same load through output reactors. The parallel-connected inverter units may receive simultaneous and similar control signals to provide a desired output of the power inverter. However, due to parameter differences of switch components and differing impedances in parallel branches, the currents between the units can be unequal in magnitude. Such a current imbalance can stress the components unevenly and wear switch components with higher current prematurely. A higher current in a switch component can result in a higher dissipated power and, further, a higher temperature of the component.

Current imbalance has been addressed by modifying switch control pulses in order to balance the currents. The control pulses can be modified by delaying a turn-on time instant for a switch that has the highest current or by delaying turn-off time instants for a switch that has the smallest current. One such method is disclosed in EP0524398. In these solutions, the conducting times of the parallel components are modified to equalize stresses to the switch components on the basis of measured inverter unit currents.

US8432714 discloses a method for balancing load between parallel-connected inverters wherein temperatures of each output leg of each inverter are determined and the switching instructions for one or more of the parallel inverters are modified for controlling the temperatures of the output legs.

WO2017079125A1 discloses a method wherein the output voltages of all the parallel connected power devices are measured, and the measuring results are used for mitigating timing differences during output voltage state changes caused e.g. by gate driver circuit and switching component parameter tolerances.

US7068525 discloses a method of operating multiple parallel-connected inverters by regulating the individual currents of the inverters separately.

US2014204643 discloses an inverter controlled by the current-sharing controller.

US2016172976 discloses a non-interleaved inverter wherein the circulation currents are controlled to a minimum while performing current balancing.

EP0813292 discloses a regular current balancing by providing shifts in PWM signal based on an error signal between each of the individual branch currents and the average branch current.

BRIEF DESCRIPTION OF EMBODIMENS

An object of the present invention is to provide an improved power inverter system having two or more parallel-connected inverter legs. The power inverter system is recited in the independent claim 1. Preferred embodiments are disclosed in the dependent claims.

An aspect of the invention is a power inverter system, comprising

two or more switching mode inverter legs connected in parallel between a common DC input and a common phase output to feed a phase output current to a common load, the phase output current being formed by combined leg output currents of the parallel-connected inverter legs, wherein commutations of the parallel-connected inverter legs are initiated by essentially simultaneous commutation commands,
a control arrangement configured to balance current sharing between the parallel-connected inverter legs by means of adjusting switching instants of main switches of the parallel-connected inverter legs,
wherein the control arrangement is configured to sense the leg output current before and after a commutation in each of the parallel-connected inverter legs to obtain a pre-commutation current value and a post-commutation current value, and wherein the control arrangement is configured to adjust switching instants of the main switches for subsequent commutation autonomously in each of the parallel-connected inverter legs based on a difference between the pre-commutation and the post-commutation current values of the respective parallel-connected inverter leg to control the difference towards zero, the difference being representative of a timing difference between switching instants of the respective parallel-connected inverter leg and at least one of the other parallel-connected inverter legs.

In an embodiment, if a sign of the difference between the pre-commutation and the post-commutation current values is negative, the control arrangement is configured to adjust switching instants for subsequent commutation so as to increase the negative difference towards zero, and wherein, if a sign of the difference between the pre-commutation and the post-commutation current values is positive, the control arrangement is configured to adjust switching instants for subsequent commutation so as to decrease the positive difference towards zero.

In an embodiment, the sign of the difference between the pre-commutation and the post-commutation current values indicates whether the switching instant of the parallel-connected inverter leg is earlier or later relative to a corresponding switching instant of at least one of the other parallel-connected inverter legs, and wherein the control arrangement is configured to advance the switching instants of the main switch, if the sign of the difference between the pre-commutation and the post-commutation current values indicates the switching instant of the parallel-connected inverter leg is later relative to a corresponding switching instants of at least one other parallel-connected inverter leg.

An another aspect of the invention is a power inverter system, comprising

two or more switching mode inverter legs connected in parallel between a common DC input and, via leg output inductors, a common phase output to feed a phase output current to a common load, the phase output current being formed by combined leg output currents of the parallel-connected inverter legs, wherein commutations of the parallel-connected inverter legs are initiated by essentially simultaneous commutation commands,
a control arrangement configured to balance current sharing between the parallel-connected inverter legs by means of adjusting switching instants of main switches of the parallel-connected inverter legs,
wherein the control arrangement is configured to sense a voltage pulse over the leg output inductor in each of the parallel-connected inverter legs during the commutation, and wherein the control arrangement is configured to adjust the switching instants autonomously in each of the parallel-connected inverter legs based on the duration and/or sign of the sensed output inductor voltage pulse or an integral of the voltage pulse of the respective parallel-connected inverter leg to control the magnitude and direction of a commutation-induced current difference towards zero.

In an embodiment, the integral of the sensed voltage pulse represents a magnitude of the commutation-induced current difference in the parallel-connected inverter leg.

In an embodiment, the duration of the sensed voltage pulse represents a timing difference of a switching instant of the parallel-connected inverter leg relative to a corresponding switching instant of at least one other parallel-connected inverter leg.

In an embodiment, the sign of the sensed voltage pulse indicates whether the switching instant of the parallel-connected inverter leg is earlier or later relative to a corresponding switching instant of at least one other parallel-connected inverter leg.

In an embodiment, the control arrangement is configured to advance the switching instant of the parallel-connected inverter leg, if the sign of the voltage pulse indicates the switching instant of the parallel-connected inverter leg is later relative to a corresponding switching instant of at least one other parallel-connected inverter leg; and wherein the control arrangement is configured to delay the switching instant of the parallel-connected inverter leg, if the sign of the voltage pulse indicates the switching instant of the parallel-connected inverter leg is earlier relative to a corresponding switching instant of at least one other parallel-connected inverter leg.

In an embodiment, the control arrangement is configured to carry out the sensing and adjustment of the switching instants during all commutations or during a selected portion of the commutations.

In an embodiment, the control arrangement is configured to carry out the sensing at each turn-on and turn-off of the main switches.

In an embodiment, the control arrangement is configured to adjust the switching instants of the main switches to control the commutation-induced current difference or a timing difference in an individual commutation towards zero but not to zero thereby causing a stepwise swing of a phase output voltage of the inverter system during an individual commutation.

In an embodiment, the control arrangement is configured to adjust the switching instant of the main switches to control the commutation-induced current difference or a timing difference in an individual commutation towards zero to a predetermined non-zero value that is equal for turn-on and turn-off of the main switches, thereby causing a stepwise swing of a phase output voltage of the inverter system during an individual commutation.

In an embodiment, the control arrangement comprises a leg-specific controller for each of the two or more parallel-connected inverter legs to adjust the switching instants of the main switches.

In an embodiment, the power inverter system comprises two or more inverters, each of the inverters comprising one or more inverter phase legs, wherein the parallel-connected inverter legs are the corresponding inverter phase legs of the two or more inverters modules connected in parallel.

In an embodiment, the control arrangement comprises inverter-specific switching controllers for the two or more inverters, each of the inverter-specific switching controllers being configured to provide the autonomous adjustment of switching instants for each of the inverter phase legs of the respective inverter.

BRIEF DESCRIPTION OF THE DRAWINGS

In the following the invention will be described in greater detail by means of exemplary embodiments with reference to the accompanying drawings, in which

Figure 1 is a block diagram that schematically illustrates an exemplary inverter system having a plurality of parallel-connected inverters;
Figure 2 is a schematic of an exemplary inverter system having two parallel-connected inverters;
Figure 3 is a schematic block diagram of an exemplary embodiment of a switching controller;
Figures 4A-4G illustrate an example of principal waveforms for the gate control signals at turn-on and turn-off off for upper switches and for corresponding leg output currents, voltages across output inductors and an inverter output voltage of two parallel-connected inverter legs of Fig. 2;
Figure 5 is a flow diagram illustrating an exemplary procedure for an autonomous switching timing adjustment of parallel-connected inverter legs based on measuring output current before and after the commutation; and
Figure 6 is a flow diagram illustrating an exemplary procedure for an autonomous switching timing adjustment of parallel-connected inverter legs based on measuring a voltage across an output inductor during the commutation.

DESCRIPTION OF EXEMPLARY EMBODIMENTS

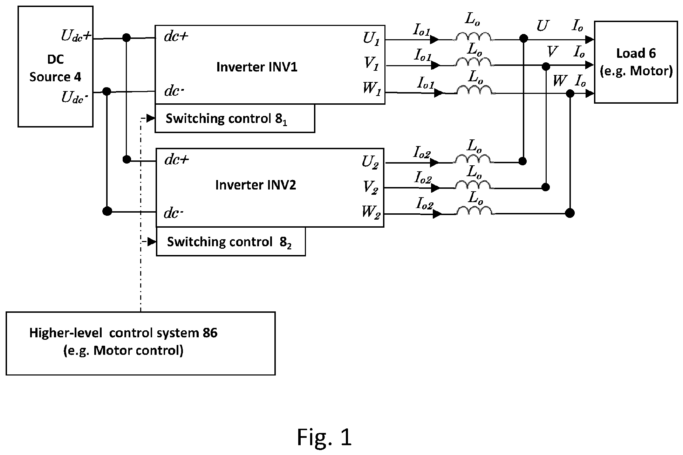

Fig. 1 shows a block diagram that schematically illustrates an exemplary inverter system having a plurality of (i.e., two or more) inverters INV1, INV2, ..., INVN connected in parallel from their DC side (e.g., DC link) input terminals (e.g., dc+, dc-) and their AC side output terminals (e.g., $U_1$, $V_1$, $W_1$, $U_2$, $V_2$, $W_2$). In the illustrated example, the inverters INV1 and INV2 are three-phase inverters providing three phase outputs $U_1$, $V_1$, $W_1$ and $U_2$, $V_2$, $W_2$, but it should be appreciated that parallel-connected inverters may be implemented as single-phase inverters, or generally include any number of inverter phases or phase legs. The parallel-connected inverters are fed by a common DC voltage source 4 with voltage $U_{dc}$, and inverters are feeding a common AC load 6. A typical application area of the parallel-connected inverters fed by a common DC voltage source 4 is an electric motor drive having an AC electric motor as a common load 6. It should be noted that the load 6 does not have to be of AC type. It can be DC as well, for example a battery energy storage or similar. Parallel connected inverter phase legs apply this invention similarly, regardless of the load type. There is a non-zero impedance at each phase output of the inverters, represented by inductances $L_o$ in Fig. 1. The output inductances Lo may be intentionally implemented (e.g., an inductor, a coil, a choke, etc.) or it may be just some leakage impedance of practical components and materials, such as cabling. The output inductances Lo may be substantially equal, but it must not necessarily be so. The corresponding phase outputs $U_1$, $U_2$, $V_1$, $V_2$, and $W_1$, $W_2$ of the parallel-connected inverters INV1 and INV2 are connected through the output inductances Lo to the common phase outputs U, V, and W, respectively. The corresponding phase outputs $U_1$, $U_2$, $V_1$, $V_2$, and $W_1$, $W_2$ of the parallel-connected inverters INV1 and INV2 may be connected together right after the output inductances Lo, and a single cable or multiple cables per phase U, V, and W may be used to connect the phase outputs to the load 6. Alternatively, each parallel-connected inverter INV1 and INV2 can be connected by means of its own cabling to the load 6, and the phase outputs $U_1$, $U_2$, $V_1$, $V_2$, and $W_1$, $W_2$ can be connected in parallel first at the terminals of the load 6. Output phase current Io of each phase U, V, W supplied to the load 6 is formed by combining phase output currents $I_{o1}$ and $I_{o2}$ of the respective phase outputs $U_1$, $U_2$, $V_1$, $V_2$, and $W_1$, $W_2$ of the parallel-connected inverters INV1 and INV2. The common DC supplied parallel-connected inverters INV1 and INV2 can be controlled to act like one high power inverter. This can be achieved by controlling the parallel inverters with essentially same control commands.

Each inverter INV1 and INV2 may have one or more half bridge legs, which can be functionally independent of each other or parallel connected inside an inverter (INV1 or INV2). The functionally similar bridge legs of the same phase of different inverters (INV1 and INV2) are connected in parallel with one another. Each bridge circuit can include a plurality of electronic switching elements or devices (e.g. insulated gate bipolar transistors (IGBTs)) that operate in a switch mode, meaning that that they are controlled to transition from a blocking state (OFF state) to a conducting state (ON state), and vice-versa, by providing control pulses (often called switching control signals or gating signals) at a high switching frequency. In a PWM modulation scheme, the width of control pulses provided to the control inputs of the switching devices is varied to provide a desired output of the inverter. The parallel-connected inverters INV1 and INV2 may have a common switching control (e.g., as a part of the higher level control 86 in Fig. 1) that provides switching signals or gating signals to operate switching devices of all inverters, or each parallel-connected inverter INV1 and INV2 may have a dedicated switching control unit $8_1$ and $8_2$ that provides switching signals or gating signals to operate switching devices of the respective inverter, as illustrated in Fig. 1. Alternatively, the control may be distributed among a common switching control unit and inverter-specific switching control units. In the latter cases, the inverters may be normal inverters (i.e., that can be used as single units) that can be connected in parallel as such. In embodiments, the switching control(s) $8_1$ and $8_2$ of the parallel-connected inverters INV1 and INV2 may be controlled by a higher-level control system 86 with simultaneous and essentially similar control signals or commands.

In embodiments, the higher-level control system 86 may be an electric motor control system or similar. It can also include a common PWM generation function (for example, a PWM modulator) for all system elements and phases.

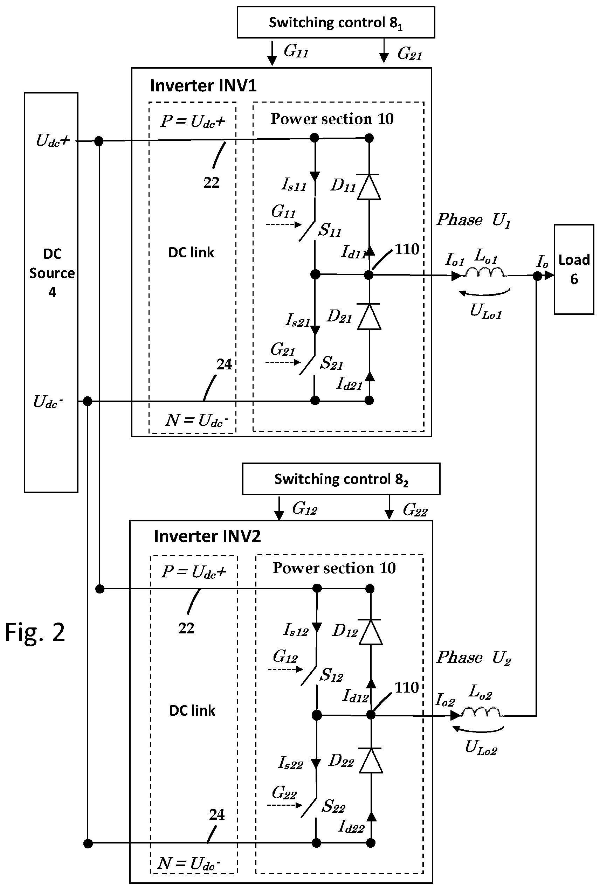

The schematic of an exemplary inverter system (e.g., single-phase inverter system) having two inverters INV1 and INV2 connected in parallel is illustrated in Figure 2 and described herein in order to alleviate comprehending operation and configuration of embodiments of the invention in relation to exemplary basic parallel-connected inverters. It is not intended to limit embodiments of the invention to the described and illustrated exemplary inverters. It shall be appreciated that the current sharing control according to embodiments of the invention is universally applicable to any number of parallel inverters, any type of inverters and their derivates and modifications regardless the specific design, configuration, and operation variations of an inverter from the exemplary inverter.

The parallel-connected inverters INV1 and INV2 may preferably be identical inverters having the same configuration and operation. The inverters INV1 and INV2 comprise power switching sections 10, such as half-bridge circuits, and dc-link rails 22 (positive dc-link potentials P) are connected to a first voltage terminal $U_{dc+}$ of the common DC power source 4, and dc-link rails 24 (negative dc-link potentials N) are connected to a second voltage terminal $U_{dc-}$ of the common DC power source 4. The output node 110 of each power switching section 10 can be connected through the corresponding output inductance $L_{o1}$ and $L_{o2}$ to the corresponding phase terminal of an ac load 6, such as an ac motor or ac grid or any applicable electric load. and thereby the corresponding phase outputs 110 of the inverters INV1 and INV2 (e.g., phase legs $U_1$ and $U_2$) are connected in parallel via $L_{o1}$ and $L_{o2}$. It should be appreciated that although a half-bridge inverter is illustrated as an example herein, the inverter may have other configurations, particularly a full-bridge configuration.

The common dc power input to the parallel-connected inverters INV1 and INV2 may be obtained from any kind of a dc power source 4, such as from an existing power supply network through a rectifier, or from a battery, fuel cell, photovoltaic array, etc. It shall be appreciated that dc-link 2 may be provided in several forms and may have a number of voltages and other attributes. It shall also be appreciated that the voltage difference between positive and negative dc-link rails is flexible, depending on how the dc-link 2 is fed. It shall be further appreciated the term bus may be utilized in place of the term link such that, for example, references to a dc-link are understood to encompass a dc-bus and vice versa.

It should be appreciated that although a single-phase inverter is illustrated as an example herein, an inverter may be implemented as a three-phase inverter, or generally include any number of inverter phases or phase legs. For example, inverters INV1 and INV2 illustrated in Figure 2 may be implemented as three-phase inverters including a power section $10_U$, $10_V$ and $10_W$ for each phase or phase leg $U_1$, $U_2$, $V_1$, $V_2$, $W_1$ and $W_2$, respectively. Operation and configuration of the other phases or phase legs $V_1$, $V_2$, $W_1$ and $W_2$ of the inverters INV1 and INV2 can be identical to the operation and configuration described for the phases or phase legs $U_1$ and $U_2$ above.

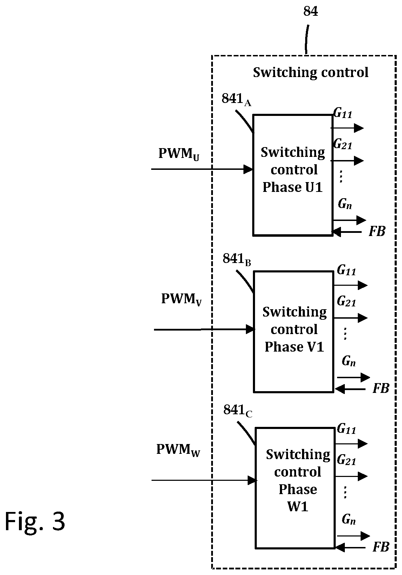

In embodiments, three-phase inverters INV1 and INV2 may each comprise a dc-link with dc-link capacitors (e.g., a dc-link illustrated in Fig. 3) common to all the power sections $10_U$, $10_V$ and $10_W$ of the respective inverter.

In embodiments, all power sections $10_U$, $10_V$ and $10_W$ of phase legs $U_1$, $V_1$ and $W_1$ in the inverter INV1 may be controlled by the same inverter-specific switching controller $8_1$. Similarly, in embodiments, all power sections $10_U$, $10_V$ and $10_W$ of phase legs $U_2$, $V_2$ and $W_2$ in the inverter INV2 may be controlled by the same inverter-specific switching controller $8_2$.

Fig. 3 is a schematic block diagram of an exemplary embodiment of a switching controller $8_1$ or $8_2$ having switching control function 84 that includes a dedicated switching control module 841A, 841B, and 841C adapted to provide control signals, such as $G_1$, $G_2$, ..., $G_n$ to each phase leg $U_1$, $V_1$ and $W_1$, respectively, based on a respective PWM signal $PWM_U$, $PWM_V$ and $PWM_W$ received from a PWM modulator. The PWM modulator may be common for all parallel-connected inverters INV1...INVn (e.g., as a part of the higher-level control 86 in Fig. 1, and the PWM commands may be sent via a communication link to the inverters. In embodiments, a leg-specific output current sensing and/or a leg-specific inductor voltage sensing feedback FD may be provided for each leg-specific switching control module 841A, 841B, and 841C. In embodiments, a leg-specific current balancing may be included in the switching control 84, and particularly in the leg-specific switching control modules 841A, 841B, and 841C. In embodiments, a leg-specific current balancing may be implemented by means of Field Programmable Gate Arrays (FPGAs).

Referring again to Fig. 2, the exemplary half-bridge power section 10 of the inverter INV1 illustrated in Fig. 2 includes a pair of main or power switching devices $S_{11}$ and $S_{21}$ coupled in parallel to the dc-link rails 22 and 24. The first (upper) main switching device $S_{11}$ may have a first terminal electrically coupled to the positive dc-link rail 22 and a second terminal electrically coupled to an output node 110. The second (lower) main switching device $S_{21}$ having a first terminal coupled to output node 110 and a second terminal coupled to the negative dc-link rail 24. Across the upper main switching device $S_{11}$ between the positive dc-link rail 22 and the output node 110 is connected a first antiparallel diode $D_{11}$, and across the lower main switching device $S_{21}$ between the output node 110 and the negative dc-link rail 24 is connected a

**EP 4 429 099 B1**

second antiparallel diode $D_{21}$. The upper main switching device $S_{21}$ is operable to turn on and turn off, and thereby to respectively connect and disconnect the dc-link rail 22 and the output node 110, in response to control signal(s) $G_{11}$ received from a control and driver circuitry, such as an inverter-specific switching controller $8_1$ illustrated in Fig. 2. The lower main switching device $S_{21}$ is operable to turn on and turn off, and thereby to respectively connect and disconnect the dc-link rail 24 and the output node 110, in response to control signal(s) $G_{21}$ received from the control and driver circuitry, such as the switching controller $8_1$. Similarly, the exemplary half-bridge power section $10_A$ of the inverter INV2 illustrated in Fig. 2 includes a pair of main or power switching devices $S_{12}$ and $S_{22}$, a first antiparallel diode $D_{12}$, a second antiparallel diode $D_{22}$, and switching control signals $G_{12}$ and $G_{22}$ from a control and driver circuitry, such as an inverter-specific switching controller $8_2$. In embodiments, the switching devices $S_{11}$, $S_{12}$, $S_{21}$ and $S_{22}$ may be insulated gate bipolar transistors (IGBT), or other type of semiconductor switching devices, such as integrated gate-commutated thyristors (IGCT), metaloxide-semiconductor field-effect transistors (MOSFET), or silicon carbide (SiC) MOSFETs to name several examples.

In operation, when the output current $I_o$ is positive ($I_{o1} > 0$, $I_{o2} > 0$) and the upper main switch $S_{11}/S_{12}$ is turned on (to a conductive state), a first switch current $I_{s11}/I_{s12}$ can flow between the dc-link rail 22 and the output node 110. Similarly, when the output current $I_o$ is negative ($I_{o1} < 0$, $I_{o2} < 0$) and the lower main switching device $S_{21}/S_{22}$ is turned on (to a conductive state), a second switch current $I_{s21}/I_{s22}$ can flow between the output node 110 and the dc-link rail 24. On the other hand, when the upper switching device $S_{11}/S_{12}$ is turned off (to a non-conductive state), the first switch current $I_{s11}/I_{s12}$ will not flow in the switch-forward direction between the dc-link rail 22 and the output node 110, although a current $I_{d11}/I_{d12}$ may flow in the switch-reverse direction through the first anti-parallel diode $D_{11}/D_{12}$ of the upper main switching device $S_{11}/S_{12}$, if the output current $I_o$ is negative ($I_{o1} < 0$, $I_{o2} < 0$). Similarly, when the lower main switching device $S_{21}/S_{22}$ is turned off (to a non-conductive state), the second switch current $I_{s21}/I_{s22}$ will not flow in the switch-forward direction between the output node 110 and the dc-link rail 24, although a current $I_{d21}/I_{d22}$ may flow in the switch-reverse direction through the anti-parallel diode $D_{21}/D_{22}$ of the lower switching device $S_{21}/S_{22}$, if the output current $I_o$ is positive ($I_{o1} > 0$, $I_{o2} > 0$). Thus, by turning on and off and closing the upper main switching device $S_{11}/S_{12}$ and the lower main switching device $S_{21}/S_{22}$, the output voltage at the output node 110 will be controlled or commutated to be either the potential P from the dc-link rail 22 or the potential N from the dc-link rail 24.

More specifically, when the output current $I_o$ is positive ($I_{o1} > 0$, $I_{o2} > 0$), it is the upper switches $S_{11}$ and $S_{12}$ that commutate their currents ($I_{s11}$ and $I_{s12}$, respectively) to diodes $D_{21}$ and $D_{22}$, respectively, and the output voltage $U_o$ swings from the potential P (the dc-link 22) to the potential N (the dc-link 24). When the output current $I_o$ is negative ($I_{o1} < 0$, $I_{o2} < 0$), it is the lower switches $S_{21}$ and $S_{22}$ that commutate their currents ($I_{s21}$ and $I_{s22}$, respectively) to diodes $D_{11}$ and $D_{12}$, respectively, and the output voltage $U_o$ swings from the potential N (the dc-link 24) to the potential P (the dc-link 22).

The commutation for a corresponding phase in the plurality of parallel-connected inverters, e.g., for the phase $U_1$ of the inverter INV1 and the phase $U_2$ of the inverter INV2, can be initiated by similar commutation commands at the same time instant. In an ideal case, the output currents $I_{o1}$ and $I_{o2}$ of the parallel-connected inverters would be equal and their difference or a differential output current $I_{do}$ would be zero, (e.g., $I_{do} = I_{o1} - I_{o2} = 0$). However, the ideal behavior during commutations would require that the corresponding switches, e.g., upper switches $S_{11}$ and $S_{12}$, in the parallel operated inverters turn on at the same instant when commutating the output potential $U_o$, for example from N to P. Likewise, the corresponding switches, e.g., upper switches $S_{11}$ and $S_{12}$, in the parallel operated inverters should turn off at the same instant when commutating the output potential, for example from P to N. Unfortunately, the parallel operated inverters do not behave similarly, for example due to parameter differences of switch components and differing impedances in parallel branches, the output currents from the parallel inverters can be unequal in magnitude, and a current difference, here defined as $I_{do} = I_{o1} - I_{o2} \neq 0$, will evolve. In other words, there can be uneven current sharing between the inverters. Due to thermal and economic reasons, it is of utmost importance that the parallel-connected inverters share the load current as evenly as possible.

According to an aspect of the invention, a current sharing between the parallel-connected inverter legs is balanced by means of adjusting switching instants of main switches of the parallel-connected inverter legs, by a control arrangement, such as the switching controls functions 84 or switching control module $841_U$, $841_U$, and $841_W$. The control arrangement may sense the leg output current before and after a commutation in each of the parallel-connected inverter legs to obtain a pre-commutation current value and a post-commutation current value, and the control arrangement may adjust switching instants of the main switches for next commutation autonomously in each of the parallel-connected inverter legs based on a difference between the pre-commutation and the post-commutation current values of the respective parallel-connected inverter leg to control the difference towards zero, the difference being representative of a timing difference and/or a commutation-induced current difference between the respective parallel-connected inverter leg and at least one of the other parallel-connected inverter legs. Thereby, the control arrangement can balance the current sharing by fine tuning the switching instants which may otherwise be generated in a conventional manner.

Let us examine the situation for a case where the output current $I_o$ is positive ($I_{o1} > 0$, $I_{o2} > 0$) in the exemplary inverter system shown in Fig. 2, i.e., the upper switches $S_{11}$ and $S_{12}$ commutate their currents ($I_{s11}$ and $I_{s12}$, respectively) to diodes $D_{21}$ and $D_{22}$, respectively.

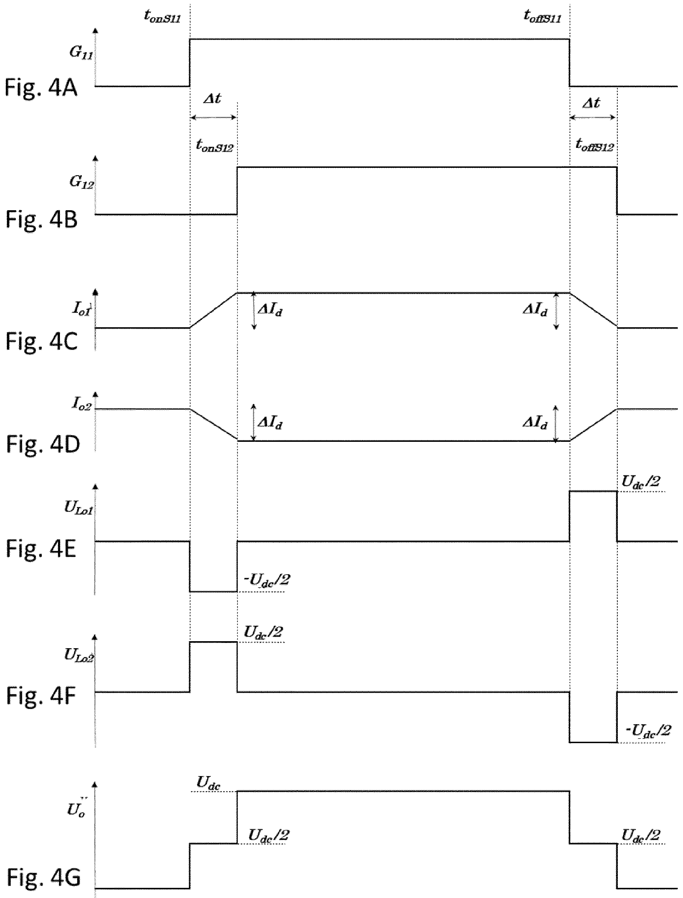

Figs. 4A-4F illustrate an example of principal wave forms for the gate control signals $G_{11}$ and $G_{12}$ at turn-on and turn-off off for upper switches $S_{11}$ and $S_{12}$ of both half-bridges, together with corresponding current and voltage wave forms of $Io_1$, $Io_2$, $U_{L1}$ and $U_{L2}$. An example of a principal wave form of the output voltage $U_o$ of the inverter system, referred to N potential is also shown in Fig. 4G. In Fig. 4A, the gate signal $G_{11}$ causes the upper switch $S_{11}$ to turn on (N to P commutation) at a turn-on instant $t_{onS11}$ and to turn off (P to N commutation) at turn-off instant $t_{offS11}$. Similarly, in Fig. 4B, the gate signal $G_{12}$ causes the upper switch $S_{12}$ to turn on (N to P commutation) at a turn-on instant $t_{onS12}$ and to turn off (P to N commutation) at turn-off instant $t_{offS12}$.

Let us also define the timing difference $\Delta t$ of the parallel-connected inverter legs for turn-on and turn-off as

$$\Delta t_{on} = t_{onS12} - t_{onS11} \qquad (1)$$

$$\Delta t_{off} = t_{offS12} - t_{offS11} \qquad (2)$$

wherein

$t_{onS11}$ is a turn-on instant of $S_{11}$
$t_{onS12}$ is a turn-on instant of $S_{12}$
$t_{offS11}$ is a turn-off instant of $S_{11}$
$t_{offS12}$ is a turn-off instant of $S_{12}$.

If there is a difference of magnitude $\Delta t$ in either the turn-on instants or the turn-off instants of the upper switches $S_{11}$ and $S_{12}$, a differential current increment $\Delta I_d$ will be induced into the circuit, as illustrated in Figs. 4C and 4D. The increment $\Delta I_d$ is the change of the differential current $I_d$ during the commutation. The magnitude of the increment will be

$$\Delta I_d = \frac{\Delta t U_{dc}}{L_{o1} + L_{o2}} \qquad (3)$$

wherein

$\Delta t$ is $\Delta t_{on}$ or $\Delta t_{off}$
$U_{dc}$ is the dc link voltage (known or measured)
$L_{o1}$ and $L_{o2}$ are output inductances.

It can be seen in equation (3) that the differential current increment $\Delta I_d$ is directly proportional to the timing difference $\Delta t$. The sign of $\Delta I_d$ in the parallel-connected inverter leg INV1 will depend on whether $\Delta I_d$ was during turn-on or turn-off of the switches, and whether $S_{11}$ was switching earlier or later than $S_{12}$ (i.e., the sign of $\Delta t$) as shown in Table I below. Similarly, the sign of of $\Delta I_d$ in the parallel-connected inverter leg INV2 for $S_{12}$ is shown in Table II below. It can be seen that the sign of $\Delta I_d$ and the sign of $\Delta t$ in one of the parallel-connected inverter legs INV1 and INV2 are opposite to those in the other one of the parallel-connected inverter legs INV1 and INV2. The Tables I and II represent the same situation but from perspective of different inverter INV1 and INV2, respectively. The top row of Table I and bottom row of Table II describe the same situation and they have opposite polarity for the differential current increment $\Delta I_d$. Same applies for bottom row of Table I and top row of Table II. Similar tables can be readily provided for a case where the output current $I_o$ is negative ($I_{o1} < 0$, $I_{o2} < 0$) in the exemplary inverter system shown in Fig. 2, i.e., the lower switches $S_{21}$ and $S_{22}$ commutate their currents ($I_{s21}$ and $I_{s22}$, respectively) to upper diodes $D_{11}$ and $D_{12}$, respectively.

Table I

| INV1 | Turn-on ($U_o$ from $N$ to $P$) | Turn-off ($U_o$ from $P$ to $N$) |
|---|---|---|
| $S_{11}$ turns on or off before $S_{12}$ ($\Delta t_{on} > 0$ or $\Delta t_{off} > 0$) | $\Delta I_d > 0$ | $\Delta I_d < 0$ |
| $S_{11}$ turns on or off after $S_{12}$ ($\Delta t_{on} < 0$ or $\Delta t_{off} < 0$) | $\Delta I_d < 0$ | $\Delta I_d > 0$ |

Table II

| INV2 | Turn-on ($U_o$ from N to $P$) | Turn-off ($U_o$ from $P$ to $N$) |
|---|---|---|
| $S_{12}$ turns on or off before $S_{11}$ ($\Delta t_{on} > 0$ or $\Delta t_{off} > 0$) | $\Delta I_d > 0$ | $\Delta I_d < 0$ |

(continued)

| INV2 | Turn-on ($U_o$ from N to P) | Turn-off ($U_o$ from P to N) |
|---|---|---|
| $S_{12}$ turns on or off after $S_{11}$ ($\Delta t_{on} < 0$ or $\Delta t_{off} < 0$) | $\Delta I_d < 0$ | $\Delta I_d > 0$ |

In the example shown in Figs. 4A-4G, the switch $S_{11}$ is early to turn on and early to turn off relative to the switch $S_{12}$. Thus, in the leg INV1, the leg output current $I_{o1}$ increases by $\Delta I_d$ ($\Delta I_d > 0$) at turn-on of $S_{11}$ and decreases by $\Delta I_d$ ($\Delta I_d < 0$) at turn-off of $S_{11}$ (Fig. 4C). In the leg INV2, the leg output current $I_2$ decreases by $\Delta I_d$ ($\Delta I_d < 0$) at turn-on of $S_{12}$ and increases by $\Delta I_d$ ($\Delta I_d > 0$) at turn-off of $S_{12}$ (Fig. 4D). For simplicity, the timing difference $\Delta t$ is drawn to be as long both in turn-on and turn-off in Figs. 4A-4G so that in this example the differential current changes cancel each other out. If the timing differences $\Delta t$ at turn-on and turn-off were not equal in durations, the changes would not cancel each other.

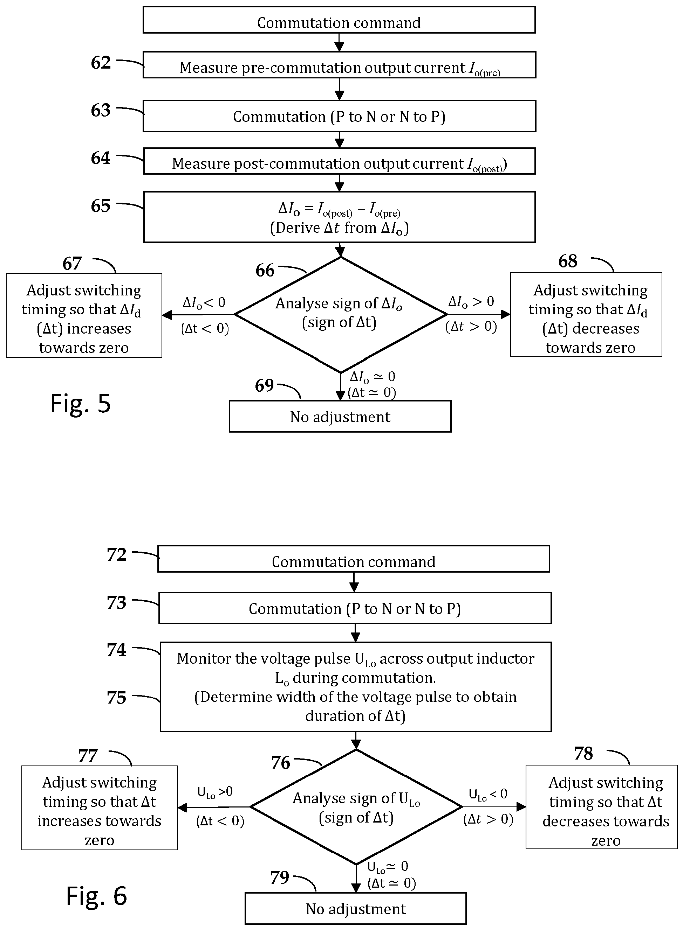

In embodiments, each parallel-connected inverter leg (INV1, INV2, ..., INVn), preferably the corresponding switching control ($8_1$, $8_2$, ..., $8_n$) thereof, is arranged to sense or measure its leg output current ($I_{o1}$, $I_{o2}$,..., $I_{0n}$) *before* (step 62 in Fig. 5) *and after* (step 64) the commutation (step 63) to obtain a pre-commutation output current sample ($I_{o1(pre)}$, $I_{o2(pre)}$, ..., $I_{on(pre)}$ and a post-commutation output current sample ($I_{o1(post)}$, $I_{o2(post)}$, ..., $I_{on(post)}$). This way each parallel-connected inverter leg (INV1, INV2, ..., INVn), preferably the switching control ($8_1$, $8_2$, ..., INVn) thereof, can acquire the increment $\Delta I_d$ as differences $\Delta I_{o1} = I_{o1(post)} - I_{o1(pre)}$, $\Delta I_{o2} = I_{o2(post)} - I_{o2(pre)}$, ..., $\Delta I_{on} = I_{on(post)} - I_{on(pre)}$, respectively (step 65). The sign of the difference $\Delta I_{o1}$, $\Delta I_{o2}$, ..., $\Delta I_{on}$ in each parallel-connected inverter leg will indicate the sign of the timing difference $\Delta t$ in the respective leg, i.e., whether the switching instant of the respective parallel-connected inverter leg is earlier or later relative to a corresponding switching instant of at least one of the other parallel-connected inverter legs.

Further, the differences $\Delta I_{o1}$, $\Delta I_{o2}$, ..., $\Delta I_{on}$ will be of opposite sign in the parallel-connected inverters having a timing difference, as illustrated in Tables I and II. Hence, based on the sign of the difference $\Delta I_{o1}$, $\Delta I_{o2}$, ..., $\Delta I_{on}$ (or the sign of $\Delta t$) in the respective parallel-connected leg (step 66), each parallel-connected inverter INV1, INV2, ..., INVn can deduce that its own $\Delta t$ must have been positive (>0) (e.g., its timing has been early) or its $\Delta t$ must have been negative (<0) (e.g., its timing has been late). Each parallel-connected inverter leg INV1, INV2, ..., INVn can now make an adjustment to its turn-off instant $t_{off}$ or turn-on instant $t_{on}$ in such way that the adjustment either increases $\Delta I_d$ ($\Delta t$) from negative towards zero (step 67) or decreases $\Delta I_d$ ($\Delta t$) from positive towards zero (step 68). If the difference $\Delta I_o$ (or $\Delta t$) is approximately zero, no timing adjustment may be needed (step 69). The sensing, analysis and adjustment is preferably carried out for each commutation event, i.e., every turn-on or turn-off of the switch (every N to P or P to N commutation). The adjusted $t_{off}$ or $t_{on}$ can be used in in a subsequent (in the next, for example) turn-off or turn-on of the switch. In embodiments, the adjustments may be stored and further adjusted in the subsequent commutations, e.g., using an integral action controller. In embodiments, if a less optimal adjustment is satisfactory, sensing, analysis and adjustment may not be carried out for each commutation event as in an optimal adjustment but for a selective portion all commutations, such as for sequentially selected commutations, for certain commutations only, or for alternating commutations.

In embodiments, also a duration of the timing difference $\Delta t$ can be estimated from the difference $\Delta I_{o1}$, $\Delta I_{o2}$, ..., $\Delta I_{on}$ (step 66 in Fig. 5), e.g., using equation (3). The duration of the timing difference $\Delta t$ can be used in determining the amount of adjustment of the turn-off instant $t_{off}$ or turn-on instant $t_{on}$ in the adjustment steps 67 and 68, for example.

The leg output currents $I_{o1}$, $I_{o2}$, ..., $I_{on}$ may be measured in various alternative ways obvious for a person skilled in the art, such as using a shunt current measurement or magnetic sensors. The pre-commutation current values $I_{o1(pre)}$, $I_{o2(pre)}$, ..., $I_{on(pre}$ and the post-commutation current values $I_{o1(post)}$, $I_{o2(post)}$, ..., $I_{on(post)}$ can be sampled either in an analogue circuit or a digital circuit. An existing current measurement needed for other control purposes in an inverter leg may also be used for the purposes of the present invention, if the filtering and limited sampling rate of the current did not deteriorate the useful signal for the extraction of $I_{o(post)} - I_{o(pre)}$.

According to an aspect of the invention, a control arrangement, such as the switching controls functions 84 or switching control module $841_U$, $841_V$, and $841_W$, is configured to sense a voltage pulse over the leg output inductor in each of the parallel-connected inverter legs during the commutation, and the control arrangement is configured to adjust the switching instants autonomously in each of the parallel-connected inverter legs based on the duration and/or sign of the sensed output inductor voltage pulse or an integral of the voltage pulse of the respective parallel-connected inverter leg to control the magnitude and direction of a commutation-induced current difference towards zero. Thereby, the control arrangement can balance the current sharing by fine tuning the switching instants which may otherwise be generated in a conventional manner.

Referring to the exemplary inverter system shown in Fig. 2, the inverter leg INV1, INV2, ..., INVn may monitor a voltage $U_{Lo1}$, $U_{Lo2}$, ..., $U_{Lon}$ (step 74 in Fig. 6) which is created across the output inductor $L_{o1}$, $L_{o2}$, ..., $L_{on}$ during commutation (step 73), if there is a timing difference $\Delta t$ in the switching. As can be seen in Figs. 4E and 4F, positive or negative voltage pulses $U_{Lo1}$ and $U_{Lo2}$ will be created across the inductors $L_{o1}$ and $L_{o2}$ of the inverter legs INV1 and INV2, respectively, due to a timing difference $\Delta t$ The sign of voltage pulse $U_{Lo1}$ or $U_{Lo2}$ in the parallel-connected inverter leg INV1 or INV2 will depend on whether the voltage pulse was during turn-on or turn-off of the switches, and whether the switching in the respective parallel inverter leg earlier *(Δt >0)* or later *(Δt < 0)* than the switching in the other parallel-connected inverter leg (i.e., the sign of *Δt)*. Finally, the positive and negative differential current increments $\Delta I_d$ in the output currents $I_{o1}$ and $I_{o2}$ of the inverter legs INV1 and INV2, respectively, are formed as an integral of the inductor voltage pulses $U_{Lo1}$ and $U_{Lo2}$ over the timing difference *Δt.*

In the example shown in Figs. 4A-4G, the switch $S_{11}$ is early to turn on and early to turn off relative to the switch $S_{12}$ *(Δt >0)*. Thus, in the leg INV1, a negative voltage pulse $U_{Lo1}$ is created across the inductor $L_{o1}$ at turn-on of $S_{11}$ and a positive voltage pulse $U_{Lo1}$ is created across the inductor $L_{o1}$ at turn-off of $S_{11}$ (Fig. 4E), causing a positive $\Delta I_d$ ($\Delta I_d > 0$) at turn-on of $S_{11}$ and a negative $\Delta I_d$ ($\Delta I_d < 0$) at turn-off of $S_{11}$. In the leg INV2, a positive voltage pulse $U_{Lo2}$ is created across the inductor $L_{o2}$ at turn-off of $S_{12}$ and a negative voltage pulse $U_{Lo2}$ is created across the inductor $L_{o2}$ at turn-on of $S_{12}$ (Fig. 4F), causing a negative $\Delta I_d$ ($\Delta I_d < 0$) at turn-off of $S_{12}$ and a positive $\Delta I_d$ ($\Delta I_d > 0$) at turn-on of $S_{12}$.

Further, the voltages $U_{Lo1}$, $U_{Lo2}$, ..., $U_{Lon}$ will be of opposite sign in the parallel-connected inverters having a timing difference. Hence, based on the sign of the voltage $U_{Lo1}$, $U_{Lo2}$, ..., $U_{Lon}$ (or the sign of *Δt)* in the respective parallel-connected leg (step 76), each parallel-connected inverter INV1, INV2, ..., INVn can deduce that its own *Δt* must have been positive (>0) (e.g., its timing has been early) or its *Δt* must have been negative (<0) (e.g., its timing has been late). Each parallel-connected inverter leg INV1, INV2, ..., INVn can now make an adjustment to its turn-off instant $t_{off}$ or turn-on instant $t_{on}$ in such way that the adjustment either increases $\Delta I_d$ *(Δt)* from negative towards zero (step 77) or decreases $\Delta I_d$ *(Δt)* from positive towards zero (step 78). If the voltage $U_{Lo1}$, $U_{Lo2}$, ..., $U_{Lon}$ (or *Δt)* is approximately zero, no timing adjustment may be needed (step 79). The monitoring, analysis and adjustment is preferably carried out for each commutation event, i.e., every turn-on or turn-off of the switch (every N to P or P to N commutation). The adjusted $t_{off}$ or $t_{on}$ can be used in a subsequent (in the next, for example) turn-off or turn-on of the switch. In embodiments, the adjustments may be stored and further adjusted in the subsequent commutations, e.g., using an integral action controller. In embodiments, if a less optimal adjustment is satisfactory, sensing, analysis and adjustment may not be carried out for each commutation event as in an optimal adjustment but for a selective portion all commutations, such as for sequentially selected commutations, for certain commutations only, or for alternating commutations.

In embodiments, the duration of the timing difference *Δt* can also be acquired directly from the width or duration of the voltage pulse $U_{Lo1}$, $U_{Lo2}$, ..., $U_{Lon}$. Therefore, a benefit of voltage measurement-based approach may be the speed and simplicity of measurement, as there is no need for a current sampling and indirect estimation of *Δt* from the $\Delta I_o$ by means of equation (3), for example. The duration of the timing difference *Δt* can be used in determining the amount of adjustment of the turn-off instant $t_{off}$ or turn-on instant $t_{on}$ in the adjustment steps 77 and 78, for example.

In embodiments, the voltage $U_{Lo1}$, $U_{Lo2}$, ..., $U_{Lon}$ may be integrated by an integrator circuit during the commutation to acquire a measure of $\Delta I_d$. The measure of $\Delta I_d$ can be used in determining the amount of adjustment of the turn-off instant $t_{off}$ or turn-on instant $t_{on}$ in the adjustment steps 77 and 78, for example.

The determination of the duration or width of the voltage pulse across the output inductor, and/or the integration of the voltage pulse across the output inductor can be implemented in an analogue or digital circuit. The voltage measurement-based approach could possibly be made faster and real-time with analogue electronics.

In embodiments, the timing adjustment may comprise postponing the turn-off instant $t_{off}$ or the turn-on instant $t_{on}$ of the respective switch to decrease the current increment $\Delta I_d$ and/or the timing difference *Δt* towards zero, if the switch is switching early *(Δt > 0)*, and advancing the turn-off instant $t_{off}$ or the turn-on instant $t_{on}$ of the respective switch to increase the current increment $\Delta I_d$ and/or the timing difference *Δt* towards zero, if the switch is switching early *(Δt < 0)*.

In embodiments, the timing difference *Δt* and/or the current increments $\Delta I_d$ in individual commutations are controlled by adjusting the switching instants so that the timing difference *Δt* and/or the current increment $\Delta I_d$ is not zero during commutations but stays bounded while an output voltage of the inverter system will swing in a stepwise manner.

In embodiments, the timing difference *Δt* and/or the current increments $\Delta I_d$ in individual commutations are controlled to a fixed non-zero value by adjusting the switching instants, the fixed non-zero value being equal in a turn-on commutation and a turn-off commutation. As a consequence, the differential current $I_d$ jumps back and forth by $\Delta I_d$ but stays bounded. An example of a resulting behavior of the output voltage $U_o$ of the inverter system is illustrated in in Fig. 4G: the swings of the output voltage $U_o$ from *N* to P and from *P to N* occur in a step wise manner. The stepwise swing of the output voltage may be beneficial in some applications. In motor drive applications, a stepwise output voltage fed to a motor winding, for example, would ease the stress on motor insulation and bearings.

In embodiments, the amount of adjustment of the turn-off instant $t_{off}$ or the turn-on instant $t_{on}$ of the respective switch may be approximately half of the duration of the timing difference *Δt.* Because the adjustment is made to opposite directions in the two parallel-connected inverter legs, the total amount of adjustments will be approximately *Δt,* thereby cancelling the timing difference or the current difference between the two legs in subsequent commutations.

The switching control and timing adjustment techniques described herein may be implemented by various means. For example, these techniques may be implemented in hardware (one or more analog or digital and/devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

It will be obvious to a person skilled in the art that, as the technology advances, the inventive concept can be implemented in various ways. The invention and its embodiments are not limited to the examples described above but may vary within the scope of the claims.

## Claims

1.  A power inverter system, comprising

    two or more switching mode inverter legs (10, INV1, INV2) connected in parallel between a common DC input (Udc+, Udc-) and a common phase output (U1, U2, V1, V2, W1, W2) to feed a phase output current (Io) to a common load (6), the phase output current being formed by combined leg output currents (Io1, Io2) of the parallel-connected inverter legs, wherein commutations of the parallel-connected inverter legs are initiated by essentially simultaneous commutation commands,
    a control arrangement (84, 86, $8_1$, $8_2$) configured to balance current sharing between the parallel-connected inverter legs by means of adjusting switching instants of main switches (S22, S21, S12, S22) of the parallel-connected inverter legs;
    **characterized in that:**
    the control arrangement is configured to sense the leg output current before and after a commutation in each of the parallel-connected inverter legs to obtain a pre-commutation current value (Io(pre)) and a post-commutation current value (Io(post)), and wherein the control arrangement is configured to adjust switching instants of the main switches for subsequent commutation autonomously in each of the parallel-connected inverter legs based on a difference ($\Delta$Io) between the pre-commutation and the post-commutation current values of the respective parallel-connected inverter leg to control the difference towards zero, the difference being representative of a timing difference ($\Delta$t) between switching instants of the respective parallel-connected inverter leg and at least one of the other parallel-connected inverter legs.

2.  The power inverter system as claimed in claim 1, wherein, if a sign of the difference between the pre-commutation and the post-commutation current values is negative, the control arrangement is configured to adjust switching instants for subsequent commutation so as to increase the negative difference towards zero, and wherein, if a sign of the difference between the pre-commutation and the post-commutation current values is positive, the control arrangement is configured to adjust switching instants for subsequent commutation so as to decrease the positive difference towards zero.

3.  The power inverter system as claimed in claim 1 or 2, wherein the sign of the difference between the pre-commutation and the post-commutation current values indicates whether the switching instant of the parallel-connected inverter leg is earlier or later relative to a corresponding switching instant of at least one of the other parallel-connected inverter legs, and wherein the control arrangement is configured to advance the switching instants of the main switch, if the sign of the difference between the pre-commutation and the post-commutation current values indicates the switching instant of the parallel-connected inverter leg is later relative to a corresponding switching instants of at least one other parallel-connected inverter leg.

4.  A power inverter system, comprising

    two or more switching mode inverter legs (10, INV1, INV2) connected in parallel between a common DC input (Udc+, Udc-) and, via leg output inductors, a common phase output (U1, U2, V1, V2, W1, W2) to feed a phase output current (Io) to a common load (6), the phase output current being formed by combined leg output currents (Io1, Io2) of the parallel-connected inverter legs, wherein commutations of the parallel-connected inverter legs are initiated by essentially simultaneous commutation commands,
    a control arrangement (84, 86, $8_1$, $8_2$) configured to balance current sharing between the parallel-connected inverter legs by means of adjusting switching instants of main switches (S22, S21, S12, S22) of the parallel-connected inverter legs; **characterized in that:**

the control arrangement is configured to sense a voltage puls (ULo) over the leg output inductor in each of the parallel-connected inverter legs during the commutation, and wherein the control arrangement is configured to adjust the switching instants autonomously in each of the parallel-connected inverter legs based on the duration and/or sign (76) of the sensed output inductor voltage pulse or an integral of the voltage pulse of the respective parallel-connected inverter leg to control the magnitude and direction of a commutation-induced current difference towards zero.

5. The power inverter system as claimed in claim 4, wherein the integral of the sensed voltage pulse represents a magnitude of the commutation-induced current difference in the parallel-connected inverter leg.

6. The power inverter system as claimed in claim 4 or 5, wherein the duration of the sensed voltage pulse represents a timing difference of a switching instant of the parallel-connected inverter leg relative to a corresponding switching instant of at least one other parallel-connected inverter leg.

7. The power inverter system as claimed in any one of claim 4-6, wherein the sign of the sensed voltage pulse indicates whether the switching instant of the parallel-connected inverter leg is earlier or later relative to a corresponding switching instant of at least one other parallel-connected inverter leg.

8. The power inverter system as claimed in any one of claims 4-7, wherein the control arrangement is configured to advance the switching instant of the parallel-connected inverter leg, if the sign of the voltage pulse indicates the switching instant of the parallel-connected inverter leg is later relative to a corresponding switching instant of at least one other parallel-connected inverter leg; and wherein the control arrangement is configured to delay the switching instant of the parallel-connected inverter leg, if the sign of the voltage pulse indicates the switching instant of the parallel-connected inverter leg is earlier relative to a corresponding switching instant of at least one other parallel-connected inverter leg.

9. The power inverter system as claimed in any one of claims 1-8, wherein the control arrangement is configured to carry out the sensing and adjustment of the switching instants during all commutations or during a selected portion of the commutations.

10. The power inverter system as claimed in any one of claims 1-9, wherein the control arrangement is configured to carry out the sensing at each turn-on and turn-off of the main switches.

11. The power inverter system as claimed in any one of claims 1-10, wherein the control arrangement is configured to adjust the switching instants of the main switches to control the commutation-induced current difference or a timing difference in an individual commutation towards zero but not to zero thereby causing a stepwise swing of a phase output voltage of the inverter system during an individual commutation.

12. The power inverter system as claimed in any one of claims 1-11, wherein the control arrangement is configured to adjust the switching instant of the main switches to control the commutation-induced current difference or a timing difference in an individual commutation towards zero to a predetermined non-zero value that is equal for turn-on and turn-off of the main switches, thereby causing a stepwise swing of a phase output voltage of the inverter system during an individual commutation.

13. The power inverter system as claimed in any one of claims 1-12, wherein the control arrangement comprises a leg-specific controller for each of the two or more parallel-connected inverter legs to adjust the switching instants of the main switches.

14. The power inverter system as claimed in any one of claims 1-13, wherein the power inverter system comprises two or more inverters, each of the inverters comprising one or more inverter phase legs, wherein the parallel-connected inverter legs are the corresponding inverter phase legs of the two or more inverters modules connected in parallel.

15. The power inverter system as claimed in claim 14, wherein the control arrangement comprises inverter-specific switching controllers for the two or more inverters, each of the inverter-specific switching controllers being configured to provide the autonomous adjustment of switching instants for each of the inverter phase legs of the respective inverter.

**Patentansprüche**

1. Leistungswechselrichtersystem, das Folgendes umfasst:

   zwei oder mehr Schaltmoduswechselrichterzweige (10, INV1, INV2), die parallel zwischen einem gemeinsamen DC-Eingang (Udc+, Udc-) und einem gemeinsamen Phasenausgang (U1, U2, V1, V2, W1, W2) geschaltet sind, um einen Phasenausgangsstroms (Io) einer gemeinsamen Last (6) zuzuführen, wobei der Phasenausgangsstrom durch kombinierte Zweigausgangsströme (Io1, Io2) der parallel geschalteten Wechselrichterzweige gebildet wird, wobei Kommutationen der parallel geschalteten Wechselrichterzweige durch im Wesentlichen gleichzeitige Kommutierungsbefehle initiiert werden,
   eine Steueranordnung (84, 86, 8$_1$, 8$_2$), die dazu ausgelegt ist, eine Stromteilung zwischen den parallel geschalteten Wechselrichterzweigen durch Anpassen von Schaltzeitpunkten von Hauptschaltern (S22, S21, S12, S22) der parallel geschalteten Wechselrichterzweige auszugleichen;
   **dadurch gekennzeichnet, dass**
   die Steueranordnung dazu ausgelegt ist, den Zweigausgangsstrom vor und nach einer Kommutierung in jedem der parallel geschalteten Wechselrichterzweige zu erfassen, um einen Vorkommutierungsstromwert (Io(pre)) und einen Nachkommutierungsstromwert (Io(post)) zu erhalten, und wobei die Steueranordnung dazu ausgelegt ist, Schaltzeitpunkte der Hauptschalter für eine nachfolgende Kommutierung autonom in jedem der parallel geschalteten Wechselrichterzweige basierend auf einer Differenz ($\Delta$Io) zwischen den Vorkommutierungs- und den Nachkommutierungsstromwerten des jeweiligen parallel geschalteten Wechselrichterzweigs anzupassen, um die Differenz zu Null hin zu steuern, wobei die Differenz eine Zeitdifferenz ($\Delta$t) zwischen Schaltzeitpunkten des jeweiligen parallel geschalteten Wechselrichterzweigs und mindestens einem der anderen parallel geschalteten Wechselrichterzweige repräsentiert.

2. Leistungswechselrichtersystem nach Anspruch 1, wobei, falls ein Vorzeichen der Differenz zwischen den Vorkommutierungs- und den Nachkommutierungsstromwerten negativ ist, die Steueranordnung dazu ausgelegt ist, Schaltzeitpunkte für eine nachfolgende Kommutierung anzupassen, um die negative Differenz zu null hin zu erhöhen, und wobei, falls ein Vorzeichen der Differenz zwischen den Vorkommutierungs- und den Nachkommutierungsstromwerten positiv ist, die Steueranordnung dazu ausgelegt ist, Schaltzeitpunkte für eine nachfolgende Kommutierung anzupassen, um die positive Differenz zu null hin zu verringern.

3. Leistungswechselrichtersystem nach Anspruch 1 oder 2, wobei das Vorzeichen der Differenz zwischen den Vorkommutierungs- und den Nachkommutierungsstromwerten angibt, ob der Schaltzeitpunkt des parallel geschalteten Wechselrichterzweigs relativ zu einem entsprechenden Schaltzeitpunkt von mindestens einem der anderen parallel geschalteten Wechselrichterzweige früher oder später liegt, und wobei die Steueranordnung dazu ausgelegt ist, die Schaltzeitpunkte des Hauptschalters vorzuschieben, falls das Vorzeichen der Differenz zwischen den Vorkommutierungs- und den Nachkommutierungsstromwerten angibt, dass der Schaltzeitpunkt des parallel geschalteten Wechselrichterzweigs relativ zu einem entsprechenden Schaltzeitpunkt mindestens eines anderen parallel geschalteten Wechselrichterzweigs später liegt.

4. Leistungswechselrichtersystem, das Folgendes umfasst:

   zwei oder mehr Schaltmodus-Wechselrichterzweige (10, INV1, INV2), die parallel zwischen einem gemeinsamen Gleichspannungseingang (Udc+, Udc-) und über Zweigausgangsinduktivitäten einem gemeinsamen Phasenausgang (U1, U2, V1, V2, W1, W2) geschaltet sind, um einen Phasenausgangsstroms (Io) einer gemeinsamen Last (6) zuzuführen, wobei der Phasenausgangsstrom durch kombinierte Zweigausgangsströme (Io1, Io2) der parallel geschalteten Wechselrichterzweige gebildet wird, wobei Kommutationen der parallel geschalteten Wechselrichterzweige durch im Wesentlichen gleichzeitige Kommutierungsbefehle initiiert werden,
   eine Steueranordnung (84, 86, 8$_1$, 8$_2$), die dazu ausgelegt ist, eine Stromteilung zwischen den parallel geschalteten Wechselrichterzweigen durch Anpassen von Schaltzeitpunkten von Hauptschaltern (S22, S21, S12, S22) der parallel geschalteten Wechselrichterzweige auszugleichen;
   **dadurch gekennzeichnet, dass**
   die Steueranordnung dazu ausgelegt ist, während der Kommutierung einen Spannungsimpuls (ULo) über die Zweigausgangsinduktivität in jedem der parallel geschalteten Wechselrichterzweige zu erfassen, und wobei die Steueranordnung dazu ausgelegt ist, die Schaltzeitpunkte in jedem der parallel geschalteten Wechselrichterzweige basierend auf der Dauer und/oder dem Vorzeichen (76) des erfassten Ausgangsinduktivitätsspannungsimpulses oder einem Integral des Spannungsimpulses des jeweiligen parallel geschalteten Wechselrichterzweigs autonom anzupassen, um die Größe und Richtung einer kommutierungsinduzierten Stromdifferenz gegen Null hin zu steuern.

5. Leistungswechselrichtersystem nach Anspruch 4, wobei das Integral des erfassten Spannungsimpulses eine Größe der kommutierungsinduzierten Stromdifferenz in dem parallel geschalteten Wechselrichterzweig repräsentiert.

6. Leistungswechselrichtersystem nach Anspruch 4 oder 5, wobei die Dauer des erfassten Spannungsimpulses eine Zeitdifferenz eines Schaltzeitpunkts des parallel geschalteten Wechselrichterzweigs relativ zu einem entsprechenden Schaltzeitpunkt mindestens eines anderen parallel geschalteten Wechselrichterzweigs repräsentiert.

7. Leistungswechselrichtersystem nach einem der Ansprüche 4-6, wobei das Vorzeichen des erfassten Spannungsimpulses angibt, ob der Schaltzeitpunkt des parallel geschalteten Wechselrichterzweigs relativ zu einem entsprechenden Schaltzeitpunkt mindestens eines anderen parallel geschalteten Wechselrichterzweigs früher oder später liegt.

8. Leistungswechselrichtersystem nach einem der Ansprüche 4-7, wobei die Steueranordnung dazu ausgelegt ist, den Schaltzeitpunkt des parallel geschalteten Wechselrichterzweigs vorzuschieben, falls das Vorzeichen des Spannungsimpulses angibt, dass der Schaltzeitpunkt des parallel geschalteten Wechselrichterzweigs relativ zu einem entsprechenden Schaltzeitpunkt mindestens eines anderen parallel geschalteten Wechselrichterzweigs später liegt; und wobei die Steueranordnung dazu ausgelegt ist, den Schaltzeitpunkt des parallel geschalteten Wechselrichterzweigs zu verzögern, falls das Vorzeichen des Spannungsimpulses angibt, dass der Schaltzeitpunkt des parallel geschalteten Wechselrichterzweigs relativ zu einem entsprechenden Schaltzeitpunkt mindestens eines anderen parallel geschalteten Wechselrichterzweigs früher liegt.

9. Leistungswechselrichtersystem nach einem der Ansprüche 1-8, wobei die Steueranordnung dazu ausgelegt ist, das Erfassen und Anpassen der Schaltzeitpunkte während aller Kommutationen oder während eines ausgewählten Teils der Kommutationen durchzuführen.

10. Leistungswechselrichtersystem nach einem der Ansprüche 1-9, wobei die Steueranordnung dazu ausgelegt ist, das Erfassen bei jedem Ein- und Ausschalten der Hauptschalter durchzuführen.

11. Leistungswechselrichtersystem nach einem der Ansprüche 1-10, wobei die Steueranordnung dazu ausgelegt ist, die Schaltzeitpunkte der Hauptschalter anzupassen, um die kommutierungsinduzierte Stromdifferenz oder eine Zeitdifferenz in einer individuellen Kommutierung gegen Null hin, aber nicht auf Null zu steuern, wodurch ein schrittweises Schwingen einer Phasenausgangsspannung des Wechselrichtersystems während einer individuellen Kommutierung bewirkt wird.

12. Leistungswechselrichtersystem nach einem der Ansprüche 1-11, wobei die Steueranordnung dazu ausgelegt ist, den Schaltzeitpunkt der Hauptschalter anzupassen, um die kommutierungsinduzierte Stromdifferenz oder eine Zeitdifferenz in einer individuellen Kommutierung gegen Null hin zu steuern, auf einen vorbestimmten nicht-NullWert hin, der für Ein- und Ausschalten der Hauptschalter gleich ist, wodurch ein schrittweises Schwingen einer Phasenausgangsspannung des Wechselrichtersystems während einer individuellen Kommutierung bewirkt wird.

13. Leistungswechselrichtersystem nach einem der Ansprüche 1-12, wobei die Steueranordnung eine zweigspezifische Steuerung für jeden der zwei oder mehr parallel geschalteten Wechselrichterzweige umfasst, um die Schaltzeitpunkte der Hauptschalter anzupassen.

14. Leistungswechselrichtersystem nach einem der Ansprüche 1-13, wobei das Leistungswechselrichtersystem zwei oder mehr Wechselrichter umfasst, wobei jeder der Wechselrichter einen oder mehrere Wechselrichterphasenzweige umfasst, wobei die parallel geschalteten Wechselrichterzweige die entsprechenden Wechselrichterphasenzweige der zwei oder mehr Wechselrichtermodule sind, die parallel geschaltet sind.

15. Leistungswechselrichtersystem nach Anspruch 14, wobei die Steueranordnung wechselrichterspezifische Schaltsteuerungen für die zwei oder mehr Wechselrichter umfasst, wobei jede der wechselrichterspezifischen Schaltsteuerungen dazu ausgelegt ist, die autonome Anpassung von Schaltzeitpunkten für jeden der Wechselrichterphasenzweige des jeweiligen Wechselrichters bereitzustellen.

**Revendications**

1. Système onduleur, comprenant :

   deux branches d'onduleur à mode d'interruption (10, INV1, INV2) ou plus connectées en parallèle entre une entrée CC commune (Udc+, Udc-) et une sortie de phase commune (U1, U2, V1, V2, W1, W2) pour alimenter une charge commune (6) avec un courant de sortie de phase (Io), le courant de sortie de phase étant formé par des courants de sortie de branche combinés (Io1, Io2) des branches d'onduleur connectées en parallèle, des commutations des branches d'onduleur connectées en parallèle étant lancées par des ordres de commutation essentiellement simultanés, un agencement de commande (84, 86, $8_1$, $8_2$) configuré pour équilibrer le partage de courant entre les branches d'onduleur connectées en parallèle au moyen d'un ajustement d'instants d'interruption d'interrupteurs principaux (S22, S21, S12, S22) des branches d'onduleur connectées en parallèle ;
   **caractérisé en ce que** :
   l'agencement de commande est configuré pour détecter le courant de sortie de branche avant et après une commutation dans chacune des branches d'onduleur connectées en parallèle afin d'obtenir une valeur de courant avant commutation (Io(pre)) et une valeur de courant après commutation (Io(post)), et l'agencement de commande étant configuré pour ajuster de manière autonome des instants d'interruption des interrupteurs principaux pour une commutation suivante dans chacune des branches d'onduleur connectées en parallèle sur la base d'une différence (ΔIo) entre les valeurs de courant avant commutation et après commutation de la branche d'onduleur connectée en parallèle respective afin de commander la différence vers zéro, la différence étant représentative d'une différence de base temporelle (Δt) entre les instants d'interruption de la branche d'onduleur connectée en parallèle respective et au moins une des autres branches d'onduleur connectées en parallèle.

2. Système onduleur selon la revendication 1, si un signe de la différence entre les valeurs de courant avant commutation et après commutation est négatif, l'agencement de commande étant configuré pour ajuster les instants d'interruption pour une commutation suivante de manière à augmenter la différence négative vers zéro et, si un signe de la différence entre les valeurs de courant avant commutation et après commutation est positif, l'agencement de commande étant configuré pour ajuster les instants d'interruption pour une commutation suivante de manière à diminuer la différence positive vers zéro.

3. Système onduleur selon la revendication 1 ou 2, le signe de la différence entre les valeurs de courant avant commutation et après commutation indiquant si l'instant d'interruption de la branche d'onduleur connectée en parallèle est antérieur ou postérieur à un instant d'interruption correspondant d'au moins une des autres branches d'onduleur connectées en parallèle, et l'agencement de commande étant configuré pour avancer les instants d'interruption de l'interrupteur principal si le signe de la différence entre les valeurs de courant avant commutation et après commutation indique que l'instant d'interruption de la branche d'onduleur connectée en parallèle est postérieur à un instant d'interruption correspondant d'au moins une autre branche d'onduleur connectée en parallèle.

4. Système onduleur, comprenant :

   deux branches d'onduleur à mode d'interruption (10, INV1, INV2) ou plus connectées en parallèle entre une entrée CC commune (Udc+, Udc-) et, par l'intermédiaire d'inducteurs de sortie de branche, une sortie de phase commune (U1, U2, V1, V2, W1, W2) pour alimenter une charge commune (6) avec un courant de sortie de phase (Io), le courant de sortie de phase étant formé par des courants de sortie de branche combinés (Io1, Io2) des branches d'onduleur connectées en parallèle, des commutations des branches d'onduleur connectées en parallèle étant lancées par des ordres de commutation essentiellement simultanés, un agencement de commande (84, 86, $8_1$, $8_2$) configuré pour équilibrer le partage de courant entre les branches d'onduleur connectées en parallèle au moyen d'un ajustement d'instants d'interruption d'interrupteurs principaux (S22, S21, S12, S22) des branches d'onduleur connectées en parallèle ;
   **caractérisé en ce que** :
   l'agencement de commande est configuré pour détecter une impulsion de tension (ULo) sur l'inducteur de sortie de branche dans chacune des branches d'onduleur connectées en parallèle pendant la commutation, et l'agencement de commande étant configuré pour ajuster les instants d'interruption de manière autonome dans chacune des branches d'onduleur connectées en parallèle sur la base de la durée et/ou du signe (76) de l'impulsion de tension d'inducteur de sortie ou d'une intégrale de l'impulsion de tension de la branche d'onduleur connectée en parallèle respective afin de commander l'amplitude et la direction d'une différence de courant induite par commutation vers zéro.

5. Système onduleur selon la revendication 4, l'intégrale de l'impulsion de tension détectée représentant une amplitude de la différence de courant induite par commutation dans la branche d'onduleur connectée en parallèle.

6. Système onduleur selon la revendication 4 ou 5, la durée de l'impulsion de tension détectée représentant une différence de base temporelle entre un instant d'interruption de la branche d'onduleur connectée en parallèle et un instant d'interruption correspondant d'au moins une autre branche d'onduleur connectée en parallèle.

7. Système onduleur selon l'une quelconque des revendications 4 à 6, le signe de l'impulsion de tension détectée indiquant si l'instant d'interruption de la branche d'onduleur connectée en parallèle est antérieur ou postérieur à un instant d'interruption correspondant d'au moins une autre branche d'onduleur connectée en parallèle.

8. Système onduleur selon l'une quelconque des revendications 4 à 7, l'agencement de commande étant configuré pour avancer l'instant d'interruption de la branche d'onduleur connectée en parallèle si le signe de l'impulsion de tension indique que l'instant d'interruption de la branche d'onduleur connectée en parallèle est postérieur à un instant d'interruption correspondant d'au moins une autre branche d'onduleur connectée en parallèle ; et l'agencement de commande étant configuré pour retarder l'instant d'interruption de la branche d'onduleur connectée en parallèle si le signe de l'impulsion de tension indique que l'instant d'interruption de la branche d'onduleur connectée en parallèle est antérieur à un instant d'interruption correspondant d'au moins une autre branche d'onduleur connectée en parallèle.

9. Système onduleur selon l'une quelconque des revendications 1 à 8, l'agencement de commande étant configuré pour exécuter la détection et l'ajustement des instants d'interruption pendant toutes les commutations ou pendant une partie sélectionnée des commutations.

10. Système onduleur selon l'une quelconque des revendications 1 à 9, l'agencement de commande étant configuré pour exécuter la détection à chaque fermeture et ouverture des interrupteurs principaux.

11. Système onduleur selon l'une quelconque des revendications 1 à 10, l'agencement de commande étant configuré pour ajuster les instants d'interruption des interrupteurs principaux afin de commander la différence de courant induite par commutation ou une différence de base temporelle dans une commutation individuelle vers zéro mais pas à zéro, de manière à provoquer une oscillation par paliers d'une tension de sortie de phase du système onduleur pendant une commutation individuelle.

12. Système onduleur selon l'une quelconque des revendications 1 à 11, l'agencement de commande étant configuré pour ajuster les instants d'interruption des interrupteurs principaux afin de commander la différence de courant induite par commutation ou une différence de base temporelle dans une commutation individuelle vers zéro à une valeur non nulle prédéterminée qui est égale pour la fermeture et l'ouverture des interrupteurs principaux, de manière à provoquer une oscillation par paliers d'une tension de sortie de phase du système onduleur pendant une commutation individuelle.

13. Système onduleur selon l'une quelconque des revendications 1 à 12, l'agencement de commande comprenant un dispositif de commande spécifique à une branche pour chacune des deux branches d'onduleur connectées en parallèle ou plus afin d'ajuster les instants d'interruption des interrupteurs principaux.

14. Système onduleur selon l'une quelconque des revendications 1 à 13, le système onduleur comprenant deux onduleurs ou plus, chacun des onduleurs comprenant une ou plusieurs branches de phase d'onduleur, les branches d'onduleur connectées en parallèle étant les branches de phase d'onduleur correspondantes des deux modules onduleurs ou plus connectés en parallèle.

15. Système onduleur selon la revendication 14, l'agencement de commande comprenant des dispositifs de commande d'interruption spécifiques d'un onduleur pour les deux onduleurs ou plus, chacun des dispositifs de commande d'interruption spécifiques à un onduleur étant configuré pour fournir l'ajustement autonome d'instants d'interruption pour chacune des branches de phase d'onduleur de l'onduleur respectif.

Fig. 1

Fig. 2

Fig. 3

Fig. 4A

$G_{11}$

$t_{onS11}$    $t_{offS11}$

$\Delta t$

Fig. 4B

$G_{12}$

$t_{onS12}$    $t_{offS12}$

Fig. 4C

$I_{o1}$

$\Delta I_d$    $\Delta I_d$

Fig. 4D

$I_{o2}$

$\Delta I_d$    $\Delta I_d$

Fig. 4E

$U_{Lo1}$

$U_{dc}/2$

$-U_{dc}/2$

Fig. 4F

$U_{Lo2}$

$U_{dc}/2$

$-U_{dc}/2$

Fig. 4G

$U_o^{''}$

$U_{dc}$

$U_{dc}/2$    $U_{dc}/2$

**Fig. 5**

```
                    ┌─────────────────────────────────┐
                    │      Commutation command        │
                    └─────────────────────────────────┘
                                    │
                                    ▼
62 ─┐   ┌──────────────────────────────────────────────┐
    │   │ Measure pre-commutation output current $I_{o(pre)}$ │
        └──────────────────────────────────────────────┘
                                    │
                                    ▼
63 ─┐   ┌──────────────────────────────────────────────┐
    │   │       Commutation (P to N or N to P)         │
        └──────────────────────────────────────────────┘
                                    │
                                    ▼
64 ─┐   ┌──────────────────────────────────────────────┐
    │   │ Measure post-commutation output current $I_{o(post)}$ │
        └──────────────────────────────────────────────┘
                                    │
                                    ▼
65 ─┐   ┌──────────────────────────────────────────────┐
    │   │   $\Delta I_o = I_{o(post)} - I_{o(pre)}$     │
        │   (Derive $\Delta t$ from $\Delta I_o$)      │
        └──────────────────────────────────────────────┘
```

67
Adjust switching timing so that $\Delta I_d$ ($\Delta t$) increases towards zero

$\Delta I_o < 0$
($\Delta t < 0$)

66
Analyse sign of $\Delta I_o$ (sign of $\Delta t$)

$\Delta I_o > 0$
($\Delta t > 0$)

68
Adjust switching timing so that $\Delta I_d$ ($\Delta t$) decreases towards zero

$\Delta I_o \simeq 0$
($\Delta t \simeq 0$)

69
No adjustment

---

**Fig. 6**

72
Commutation command

73
Commutation (P to N or N to P)

74
Monitor the voltage pulse $U_{Lo}$ across output inductor $L_o$ during commutation.

75
(Determine width of the voltage pulse to obtain duration of $\Delta t$)

77
Adjust switching timing so that $\Delta t$ increases towards zero

$U_{Lo} > 0$
($\Delta t < 0$)

76
Analyse sign of $U_{Lo}$ (sign of $\Delta t$)

$U_{Lo} < 0$
($\Delta t > 0$)

78
Adjust switching timing so that $\Delta t$ decreases towards zero

$U_{Lo} \simeq 0$
($\Delta t \simeq 0$)

79
No adjustment

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0524398 A
- US 8432714 B
- WO 2017079125 A1
- US 7068525 B
- US 2014204643 A
- US 2016172976 A
- EP 0813292 A